# EUROPEAN PATENT APPLICATION

(11) **EP 3 527 162 A1**
(43) Date of publication of application: **21.08.2019**
(21) Application number: 19157071.2
(22) Date of filing: 14.02.2019
(51) Int. Cl.: A61C 9/00, B05C 17/005

(54) **DENTAL NOZZLE TIP INCLUDING OPENING HAVING STEPPED LOWER FACE**

(30) Priority: 14.02.2018 KR 20180018500; 30.07.2018 US 201816048829; 19.10.2018 KR 20180125532
(71) Applicant: Moon, Hyung Joo, Gimpo-si 10120 (KR)
(72) Inventor: MOON, Hyeong Joo, 10120 Gimpo-si (KR); MOON, Cho Eun, 10120 Gimpo-si (KR); MOON, Chae Eun, 10120 Gimpo-si (KR)
(74) Representative: Calysta NV

(57) **Abstract**

Disclosed is a dental nozzle tip for an impression material, the dental nozzle tip including an impression material inlet and an impression material outlet connected to the impression material inlet, wherein the impression material outlet is configured to have an expanded type opening at a tail end opposite to an end connected to the impression material inlet and a lower face of the impression material outlet has an opening structure in a stepped shape at a portion in which the expanded type opening is formed.

## Description

### CROSS-REFERENCE TO RELATED APPLICATION(S)

This application claims the priority benefit of Korean Patent Application No. 10-2018-0018500 filed on February 14, 2018 in the Korean Intellectual Property Office, U.S. Provisional Application No. 16/048,829 filed on July 30, 2018 in the U.S. Patent and Trademark Office, and Korean Patent Application No. 10-2018-0125532 filed on October 19, 2018 in the Korean Intellectual Property Office, the disclosures of which are incorporated herein by reference for all purposes.

### BACKGROUND

### 1. Field

One or more example embodiments relate to a dental nozzle tip used to apply an impression material.

### 2. Description of Related Art

In general, impression materials may be materials used to imprint shapes of teeth and an abutment for dental treatment. Elastic impression materials may include, for example, alginic acid colloid, Thiokol, a rubber base, and a silicone rubber base. Inelastic impression materials may include, for example, a modeling compound and zinc eugenol. Various materials are selected and used based on purposes of the impression materials.

The impression material and a hardener may be stored in a pair of cartridges, respectively and discharged while being mixed with each other by a mixing tip.

The mixing tip may include a nozzle to discharge the impression material. The present disclosure relates to a nozzle tip attached to the nozzle to discharge the impression material.

In terms of the mixing tip, some techniques have been disclosed for, for example, devices that effectively mix impression materials and hardeners in a related field.

However, there has been little or no research on a method of effectively applying an impression material to a tooth and a nozzle tip for implementing the method, and an application device including the nozzle tip. Also, there is no widely known nozzle tip for ejecting an impression material to effectively apply a proper amount of impression material to a tooth, which may prevent a waste of material, and imprint a pattern of teeth with a minimal error. Accordingly, there is a desire for research on a device for effectively applying an impression material and an application method using the device.

As a prior art of related field, there is Korean Patent Laid-open Publication No. 10-2015-0018421.

### SUMMARY

An aspect provides a dental nozzle tip that evenly applies a proper amount of impression materials onto a tooth to accurately imprint a shape of the tooth while preventing a waste of materials using a simple tool to solve the aforementioned issues. Specifically, the dental nozzle tip may uniformly and relatively thinly apply bite registration materials that are used in a process of finding an accurate occlusion point.

Another aspects provides a nozzle tip that evenly applies an impression material lumped due to a difference in pressure by spreading the impression material with an appropriate thickness in an impression material applying process, and is to be conveniently used while a nozzle is moving in one direction on arranged tooth.

However, tasks of the present disclosure are not limited to those mentioned above, and other matters not mentioned can be clearly understood by those skilled in the art from the following description.

According to an aspect, there is provided a dental nozzle tip for an impression material, the dental nozzle tip including an impression material inlet and an impression material outlet connected to the impression material inlet, wherein the impression material outlet is configured to have an expanded type opening at a tail end opposite to an end connected to the impression material inlet.

The tail end with the expanded type opening may have a width greater than a height.

A width of the tail end with the expanded type opening may be 5 millimeters (mm) to 13 mm.

A height of the tail end with the expanded type opening may be 4 mm to 5.5 mm.

At least a portion of a lower face of the impression material outlet may be cut in a direction from the expanded type opening toward the impression material inlet so as to be open.

The lower face of the impression material outlet may be cut by 1 mm to 2.5 mm from a virtual straight end line of the impression material inlet so as to be open.

A shape of a cut surface of the lower face of the impression material outlet may be concavely rounded toward the impression material inlet.

In a cross section of the expanded type opening, a portion corresponding to an upper face of the impression material outlet includes a straight section.

The impression material outlet may be bent to make an acute angle with a virtual line extending from the impression material inlet.

The dental nozzle tip may include a transparent material.

The dental nozzle tip may be formed to be integrated or combined with an impression material mixing tip.

A lower face of the dental nozzle tip may include a stepped portion and, in a cross section of the expanded type opening, a portion forming a lower step of the lower face of the impression material outlet may include a straight section.

According to another aspect, there is also provided a dental impression material applying device including the dental nozzle tip and a dental impression material mixing tip including a nozzle.

According to another aspect, there is also provided a dental impression material applying method of applying an impression material to a tooth using the dental nozzle tip.

According to another aspect, there is also provided a dental nozzle tip for an impression material, the dental nozzle tip including an impression material inlet and an impression material outlet connected to the impression material inlet, wherein the impression material outlet is configured to have an expanded type opening at a tail end opposite to an end connected to the impression material inlet and a lower face of the impression material outlet has an opening structure in a stepped shape at a portion in which the expanded type opening is formed.

At least a portion of the lower face of the impression material outlet may be cut and open in a direction from the expanded type opening toward the impression material inlet when compared to an upper face of the impression material outlet.

The lower face in the stepped shape may have a central portion corresponding to a low end and both side portions corresponding to high ends based on a center of the lower face.

A central portion of the lower face in the stepped shape may include a straight section.

The impression material outlet may include an upper face, the lower face, and both side faces connecting the upper face and the lower face and is formed to have a width greater than a height.

A width of the expanded type opening may be formed in a size corresponding to a width of a tooth such that at least a width of a top surface of the tooth is covered overall by a single discharge of an impression material on the tooth.

A width of the expanded type opening may be 5 millimeters (mm) to 13 mm.

A height of the expanded type opening may be 4 mm to 5.5 mm.

A difference between a high end and a low end of the lower face of the impression material outlet may be 1 mm to 2.5 mm.

The impression material outlet may be in an expanded type structure that forms a symmetry based on a center
In a cross section of the expanded type opening, a portion corresponding to the upper face of the impression material outlet may include a straight section.

The dental nozzle tip may include a transparent material.

The dental nozzle tip may be formed to be integrated or combined with an impression material mixing tip.

According to another aspect, there is also provided a dental impression material applying device including the dental nozzle tip and a dental impression material mixing tip including a nozzle.

According to another aspect, there is also provided a dental impression material applying method including applying an impression material to a tooth using a dental nozzle tip for an impression material.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a perspective view illustrating a structure of a dental nozzle tip for an impression material according to an example embodiment;
FIG. 2 is a view illustrating a structure of an expanded type opening of a dental nozzle tip for an impression material according to an example embodiment;
FIG. 3 is a view illustrating a dental nozzle tip having a lower face of which a portion is cut in a direction to an impression material inlet to be open according to an example embodiment;
FIG. 4 is a view illustrating a connection structure between an impression material inlet and an impression material outlet of a dental nozzle tip for an impression material according to an example embodiment;
FIG. 5 is a view illustrating a structure in which a dental nozzle tip for an impression material is combined with an impression material mixing tip according to an example embodiment;
FIG. 6 is a perspective view illustrating a structure of a dental nozzle tip for an impression material according to an example embodiment;
FIG. 7 is a view illustrating a dental nozzle tip for an impression material having a lower face of which a portion is cut and open toward an impression material inlet as viewed in a direction from the lower face according to an example embodiment;
FIG. 8 is a view illustrating a dental nozzle tip for an impression material having a lower face of which at least a portion is cut and open toward an impression material inlet as viewed in a direction from an extended type opening according to an example embodiment;
FIG. 9 is a view illustrating a structure connecting an impression material inlet and an impression material outlet of a dental nozzle tip for an impression material according to an example embodiment;
FIG. 10 is a view illustrating a structure in which a dental nozzle tip for an impression material is coupled to a dental mixing tip for an impression material according to an example embodiment;
FIG. 11 is an image showing tooth on which an impression material is discharged based on a comparative example (of an upper and left portion) and an example (of an upper and right portion); and
FIG. 12 is an image showing discharged amounts of an impression material and results obtained by measuring a time used for discharge in cases of a comparative example and an example.

### DETAILED DESCRIPTION

Hereinafter, example embodiments will be described in detail with reference to the accompanying drawings. Also, in the description of embodiments, detailed description of well-known related structures or functions will be omitted when it is deemed that such description will cause ambiguous interpretation of the present disclosure. Terminologies used herein are defined to appropriately describe the example embodiments of the present disclosure and thus may be changed depending on a user, the intent of an operator, or a custom. Accordingly, the terminologies must be defined based on the following overall description of this specification.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

A dental nozzle tip for an impression material will be described in detail with reference to example embodiments and the accompanying drawings. It should be understood, however, that there is no intent to limit this disclosure to the particular example embodiments disclosed.

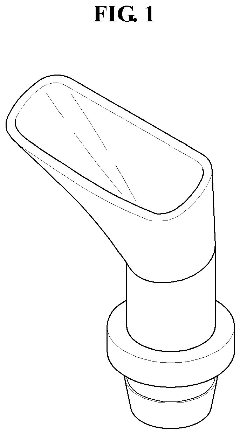

FIG. 1 is a perspective view illustrating a structure of a dental nozzle tip for an impression material according to an example embodiment.

A dental nozzle tip for an impression material may include an impression material inlet and an impression material outlet connected to the impression material inlet. The impression material outlet may have an expanded type opening at a tail end opposite to an end connected to the impression material inlet.

The dental nozzle tip may include the impression material inlet having, for example, a columnar structure. The columnar structure of the impression material inlet may be in a shape of, for example, a cylinder, a square column, a pentagonal column, and a hexagonal column.

The impression material outlet may be connected to one end portion of the impression material inlet having the columnar structure. One end of the impression material outlet may be connected to the impression material inlet. Also, the impression material outlet may include the expanded type opening in the other end.

For example, the impression material inlet may have a tail end opposite to the end connected to the impression material outlet. The tail end may be connected to an impression material mixing tip and the like. In this example, an impression material mixed with a material such as a hardener may be introduced into the dental nozzle tip.

The impression material outlet may be formed to have a cross-sectional area gradually increasing in a direction from a portion connected to the impression material inlet toward the expanded type opening.

A cross-sectional area of the expanded type opening may be at least three times greater than a cross-sectional area of the impression material inlet.

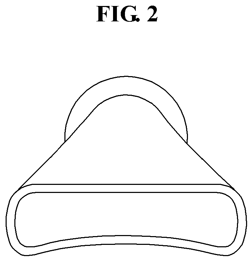

FIG. 2 is a view illustrating a structure of an expanded type opening of a dental nozzle tip for an impression material according to an example embodiment.

In a cross section of an expanded type opening, a tail end of an expanded type opening may have a width greater than a height.

For example, the cross section of the expanded type opening may be in a rectangular shape or an oval shape having a horizontal axis greater in length than a vertical axis.

A width of the tail end of the expanded type opening may be 5 millimeters (mm) to 13 mm. For example, the width of the tail end of the expanded type opening may be 7 mm to 13 mm, or 5 mm to 10 mm. A desired width of the tail end may be slightly greater than a width of a tooth, for example, a molar. Since a size of a tooth varies based on an age, a desired range may be determined based on a width of a target tooth within the aforementioned range.

A height of the tail end of the expanded type opening may be 4.0 mm to 5.5 mm. For example, the height of the tail end of the expanded type opening may be 4.2 mm to 5.5 mm or 4.0 mm to 5.2 mm. The height of the tail end of the expanded type opening may be determined based on a height of the tooth. The height of the tail end of the expanded type opening may be within the aforementioned range to prevent the impression material from flowing unnecessarily when the impression material is discharged, which may lead to a waste of the impression material. Vertical and horizonal lengths of the expanded type opening may be associated with a size of the tooth to which the impression material is applied. The impression material discharged through the expanded type opening may be applied to the tooth, and fixed and hardened such that the tooth is imprinted on the impression material.

When lengths of the longest vertical and horizontal axes of the cross section of the expanded type opening are beyond the range, an excessively large or small amount of the impression material may be discharged at once and thus, an even application may not be performed.

The length of the longest horizonal axis of the expanded type opening may be slightly greater than or equal to a general width of a tooth. A practitioner may evenly apply the impression material to the tooth by discharging the impression material once without repetitive operations.

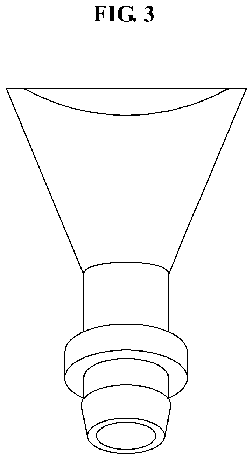

FIG. 3 is a view illustrating a dental nozzle tip having a lower face of which a portion is cut in a direction to an impression material inlet to be open according to an example embodiment.

A portion of a lower face of an impression material outlet may be cut in a direction from an expanded type opening to the impression material inlet so as to be open.

When the portion of the lower face of the impression material outlet is cut and open, an impression material may be effectively and evenly discharged toward a tooth above which the dental nozzle tip is positioned.

When a practitioner discharges the impression material while slowly moving an impression material nozzle in a direction in which an upper face of the impression material outlet is located, the impression material discharged through an open structure of the impression material outlet may be effectively applied to the tooth. The impression material discharged through a cut area of the lower face may be evenly spread by the upper face that is uncut and relatively extended unlike the lower face, which may reduce an amount of impression material used and allows an even application of the impression material.

The lower face of the impression material outlet may be cut by 1 mm to 2.5 mm from a virtual straight end line of the impression material outlet so as to be open.

When a cut portion of the impression material outlet is less than 1 mm from the virtual straight end line, the impression material may be insufficiently discharged toward in a direction in which the lower face is located. When the cut portion is greater than 2.5 mm from the virtual straight end line, an excessively large amount of impression material may be discharged in the direction in which the lower face is located, so that the impression material is unevenly applied to the tooth.

A shape of a cut surface of the lower face of the impression material outlet may be concavely rounded toward the impression material inlet.

Through this, a relatively large amount of impression material may be discharged to a central portion of the tooth such that a dental impression may be effectively performed.

In a cross section of the expanded type opening, a portion corresponding to the upper face of the impression material outlet may include a straight section.

As shown in the cross section of the expanded type opening, the upper face of the impression material outlet may include a straight portion, thereby performing a function to evenly and smoothly spread the impression material discharged through the expanded type opening.

Through this, the discharged impression material may be applied to have a flat and even surface such that a shape of the tooth is reflected accurately and a waste of the impression material is prevented.

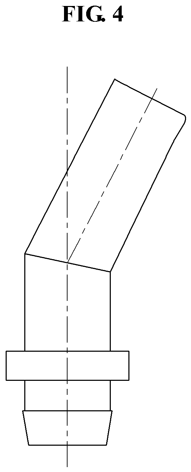

FIG. 4 is a view illustrating a connection structure between an impression material inlet and an impression material outlet of a dental nozzle tip for an impression material according to an example embodiment.

An impression material outlet may be bent to make an acute angle with a virtual line extending from an impression material inlet.

By applying a structure in which the impression material outlet is bent and connected to the impression material inlet, a practitioner may effectively apply the impression material to the tooth in a relaxed posture without need to fold a wrist by force to perform a dental impression.

The dental nozzle tip may include a transparent material.

For example, the dental nozzle tip may include silicon.

By using the transparent material, the practitioner may visually verify an amount of impression material remaining in the dental nozzle tip and an amount of impression material being discharged through the dental nozzle tip to adjust a dispensing speed while performing the dental impression.

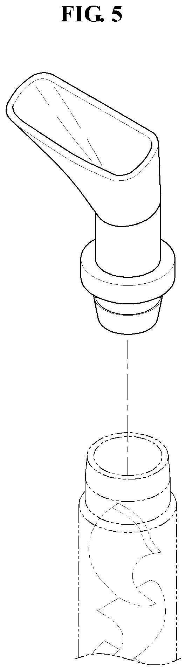

FIG. 5 is a view illustrating a structure in which a dental nozzle tip for an impression material is combined with an impression material mixing tip according to an example embodiment.

A dental nozzle tip may be formed to be integrated or combined with an impression material mixing tip.

According to an example embodiment, a dental impression material applying device may include the dental nozzle tip and a dental impression material mixing tip including a nozzle.

According to an example embodiment, a dental impression material applying method may be of applying an impression material to a tooth using the dental nozzle tip.

Meanwhile, in another example, embodiment, a dental nozzle tip for an impression material designed to include an opening structure formed to be stepped in a lower face of an outlet may be provided.

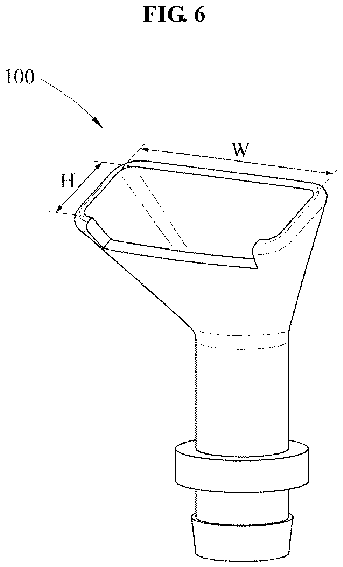

FIG. 6 is a perspective view illustrating a structure of a dental nozzle tip 100 for an impression material according to an example embodiment.

A dental nozzle tip for an impression material may include an impression material inlet and an impression material outlet connected to the impression material inlet. The impression material outlet may have an expanded type opening at a tail end opposite to an end connected to the impression material inlet. A lower face of the impression material outlet may have an opening structure in a stepped shape at a portion in which the expanded type opening is formed.

In an example, the dental nozzle tip may include an impression material inlet having a columnar structure. The impression material inlet may be formed in the columnar structure including, for example, a cylinder, a square column, a pentagonal column, or a hexagonal column.

In this instance, the impression material outlet may be connected to one end of the impression material inlet formed in the columnar structure. The impression material outlet may be connected to the impression material inlet at the one end and have the expanded type opening at the other end.

For example, a tail end of the impression material inlet opposite to an end connected to the impression material outlet may be connected to an impression material mixing tip 200. In this example, an impression material mixed with a material such as a hardener may be introduced from the impression material mixing tip into the dental nozzle tip.

The impression material outlet may be implemented with a cross-sectional area increasing from a portion connected to the impression material inlet toward the opening, which is referred to as "expanded type" in this disclosure.

A cross-sectional area of the expanded type opening may be at least three times wider than the cross-sectional area of the impression material inlet

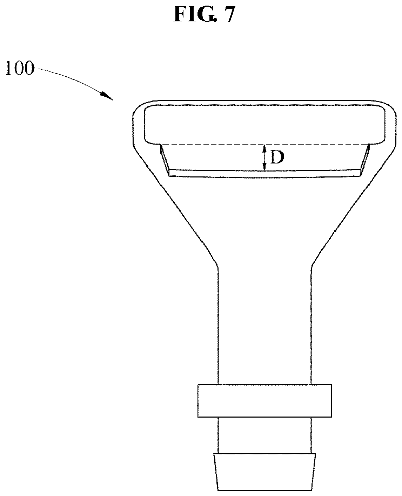

FIG. 7 is a view illustrating a dental nozzle tip for an impression material having a lower face of which a portion is cut and open toward an impression material inlet as viewed in a direction from the lower face according to an example embodiment.

Referring to FIGS. 6 and 7, a lower face of an impression material outlet may have an opening structure in a stepped shape at a portion in which an expanded type opening is formed.

At least a portion of the lower face of the impression material outlet may be cut and open in a direction from the expanded type opening toward an impression material inlet when compared to an upper face of the impression material outlet.

The lower face in the stepped shape may have a central portion corresponding to a low end and both side portions corresponding to high ends based on a center of the lower face.

When the central portion of the lower face forms a relatively low end, it is possible to induce an impression material to be discharged toward the opened central portion of the lower face in a process of discharging the impression material while the nozzle tip is moving in a predetermined direction. Both of the side portions may form the high ends, thereby preventing an excessive amount of impression material from being discharged to a side surface of a tooth instead of a top surface.

The central portion of the lower face in the stepped shape may include a straight section.

When the central portion of the lower face is formed to include the straight section, a uniform thickness of impression material may be rearwardly spread in a moving direction of the impression material outlet so as to form a layer on the tooth evenly.

The impression material outlet may include an upper face, the lower face, and both side faces connecting the upper face and the lower face and be formed to have a width greater than a height.

In this disclosure, the impression material outlet may be designed based on a tooth width and a required amount of impression material. When the width is formed to be greater than the height and corresponds to the tooth width, it is possible to realize an effect that the impression material is flat and uniformly discharged onto the tooth as compared with a typical circle-shaped outlet.

A width of the expanded type opening may be formed in a size corresponding to the tooth width such that at least a top surface of the tooth is covered overall by a single discharge of the impression material on the tooth.

Traditionally, because the impression material outlet is not formed to have a size corresponding to the tooth width, the impression material may be often discharged in a form of applying or painting twice or more on the tooth, which causes not only time and effort loss but also material loss. In addition, there was a problem that it is impossible to form a precise frame by forming an uneven coating layer.

In the present disclosure, the width of the expanded type opening may be formed to correspond to the tooth width, so that a flat and even impression material layer is formed by a single discharge.

A cross-sectional area of a tail end of the expanded type opening may have a width greater than a height.

For example, the cross-sectional area of the expanded type opening may be implemented in an elliptical form or a rectangular form in which a horizontal axis is greater in length than a vertical axis.

The width W of the tail end of the expanded type opening may be 5 mm to 13 mm. For example, the width W of the tail end of the expanded type opening may be 7 mm to 13 mm, or 5 mm to 10 mm. The width may be slightly larger than a width of a tooth, for example, a molar tooth. Since the size of the tooth varies based on an age, a preferable range may be determined within the range based on a width of a tooth to which the impression material is to be applied.

The height H of the tail end of the expanded type opening may be 4.0 mm to 5.5 mm. For example, the height H of the tail end of the expanded type opening may be 4.2 mm to 5.5 mm, or 4.0 mm to 5.2 mm. The height of the tail end of the expanded type opening may be set based on a height of a tooth. By applying the height of the tail end of the expanded type opening, it is possible to prevent the impression material from flowing to the left and right of the tooth when the impression material is discharged, which may unnecessarily increase a use amount of impression material. Horizontal and vertical lengths of the expanded type opening may be closely related to a size of the tooth to which the impression material is to be applied. The impression material discharged from the expanded type opening may be applied to the tooth, fixed to the tooth, and hardened to imprint a shape of the tooth.

In this instance, when lengths of vertical and horizontal longest axes of the cross section of the expanded type opening is beyond the numerical range, an excessively large amount or excessively small amount of impression material may be discharged at one time, so that the tooth is not evenly coated.

The length of the horizontal longest axis of the expanded type opening may be formed to be equal to or slightly greater than a typical tooth width. In this case, a practitioner who applied the impression material to the tooth may evenly apply the impression material to the tooth by only one discharge operation without repetitive work.

A difference D between the high end and the low end of the lower surface of the impression material outlet may be 1 mm to 2.5 mm.

The difference between the high end and the low end may be an important factor for determining an optimal discharge amount. The difference may be designed to have a relatively small length or a relatively large length in consideration of an angle at which an outlet is bent in the impression material inlet. In an example, the difference may be 1 mm to 1.5 mm. In another example, the difference may be 1 mm through 2.0 mm. In still another example, the difference may be 1.5 mm through 2.5 mm.

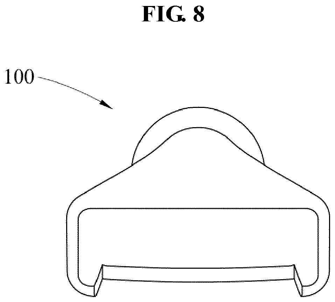

FIG. 8 is a view illustrating a dental nozzle tip for an impression material having a lower face of which at least a portion is cut and open toward an impression material inlet as viewed in a direction from an extended type opening according to an example embodiment.

According to an example embodiment, at least a portion of a lower face of an impression material outlet may be cut in a direction from an expanded type opening toward an impression material inlet so as to be open.

When the at least a portion of a lower face of an impression material outlet is cut and open, an impression material may be effectively and evenly discharged toward a tooth above which the dental nozzle tip is positioned.

When a practitioner discharges the impression material while slowly moving an impression material nozzle in a direction in which an upper face of the impression material outlet is located, the impression material discharged through an open structure of the impression material outlet may be effectively applied to the tooth. The impression material discharged through a cut area of the lower face may be evenly spread by the upper face that is uncut and relatively extended unlike the lower face, which may reduce an amount of impression material used and allows an even application of the impression material.

The lower face of the impression material outlet may be cut by 1 mm to 2.5 mm from a virtual straight end line of the impression material outlet so as to be open.

When a cut portion of the impression material outlet is less than 1 mm from the virtual straight end line, the impression material may be insufficiently discharged toward in a direction in which the lower face is located. When the cut portion is greater than 2.5 mm from the virtual straight end line, an excessively large amount of impression material may be discharged in the direction in which the lower face is located, so that the impression material is unevenly applied to the tooth.

The impression material outlet may be in an expanded type structure that forms a symmetry based on a center

Through this, the impression material may be discharged symmetrically about a center of a tooth, so that a model of the tooth is obtained without bias to either side.

In a cross section of the expanded type opening, the upper face of the impression material outlet may include a straight section.

In the cross section of the expanded type opening, the upper face of the impression material outlet may include the straight section, thereby performing a function of evenly and smoothly spreading the impression material discharged from the expanded type opening.

Through this, the discharged impression material may have a flat and even surface area instead of an uneven surface. As a result, a shape of the tooth may be well reflected and a material waste may be reduced.

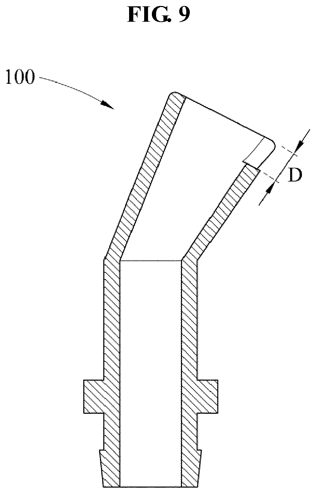

FIG. 9 is a view illustrating a structure connecting an impression material inlet and an impression material outlet of a dental nozzle tip for an impression material according to an example embodiment.

An impression material outlet may be bent to make an acute angle with a virtual line extending from an impression material inlet.

By applying a structure in which the impression material outlet is bent and connected to the impression material inlet, a practitioner may effectively apply the impression material to the tooth in a relaxed posture without need to fold a wrist by force to perform a dental impression.

The dental nozzle tip may include a transparent material.

For example, the dental nozzle tip may include silicon.

By using the transparent material, the practitioner may visually verify an amount of impression material remaining in the dental nozzle tip and an amount of impression material being discharged through the dental nozzle tip to adjust a dispensing speed while performing the dental impression.

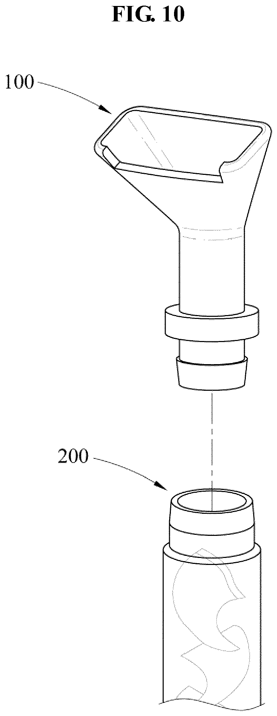

FIG. 10 is a view illustrating a structure in which a dental nozzle tip for an impression material is coupled to a dental mixing tip for an impression material according to an example embodiment.

According to an example, a dental nozzle tip may be formed to be integrated or combined with an impression material mixing tip.

According to another example embodiment, a dental impression material applying device may include the dental nozzle tip and a dental impression material mixing tip including a nozzle.

According to still another example embodiment, a dental impression material applying method may be of applying an impression material to a tooth using the dental nozzle tip.

### Example

As an example of the present disclosure, a nozzle tip (a comparative example) commonly used in a market and a nozzle tip (a name of product to be launched: Rubber duck, the example) of the present disclosure was compared in terms of a discharge type, a discharged amount, and a time used for discharge.

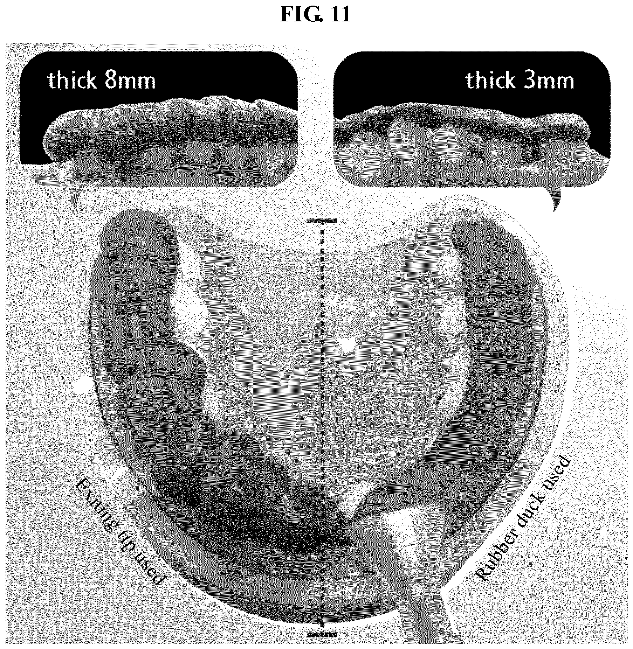

FIG. 11 is an image showing tooth on which an impression material is discharged based on a comparative example (of an upper and left portion) and an example (of an upper and right portion).

In a case of the upper and left portion of the image, it is confirmed that an impression material flows down to a side of a tooth and a thickness of the impression material is ununiform due to an excessively large and ununiform discharge amount of impression material. In this case, it is confirmed that the impression material is to be hardened while a portion of the impression material is inserted between teeth, which may lead to an inconvenience during removal, and an accurate mold of the tooth may not be acquired.

In a case of the upper and right portion of the image, a discharged amount was appropriate, no or little impression material flowed between the teeth, and a mold of the tooth was effectively acquired with an optimal discharge amount.

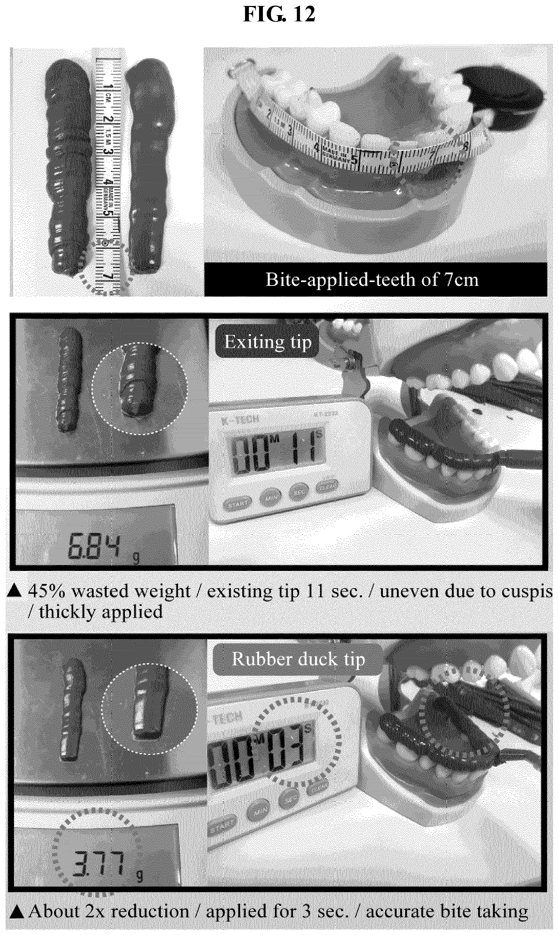

FIG. 12 is an image showing discharged amounts of an impression material and results obtained by measuring a time used for discharge in cases of a comparative example and an example.

Under an assumption that the impression material is applied to teeth with a length of 7 centimeters (cm) for an experiment under the same conditions, times used for applying the impression material of the same length, discharged amounts, and degrees of evenness of a surface were compared.

In the case of the comparative example, it is confirmed that the discharged amount is excessive and a discharge time is increased in a process of discharging the excessive discharge amount of impression material. The discharged amount is 6.84 grams (g), which may be a problem in that an unnecessarily large amount of impression material is consumed.

On the other hand, in the case of the example, it is confirmed that a discharged amount is appropriate and the discharged impression material is uniform and thin. The discharged amount is merely 3.77 g, a top of the laminated impression material is very even due to an effect of being planned, and a time for applying the impression material is reduced to 1/3 or less as compared to the comparative example.

According to example embodiments, it is possible to provide a nozzle tip attached to an end of a nozzle to evenly apply a proper amount of impression material onto a tooth, thereby accurately imprinting a shape of the tooth while preventing a waste of materials.

According to example embodiments, it is possible to provide a dental nozzle tip for an impression material to accurately verify an arrangement of teeth of a patient in order to perform an effective customized dental treatment and reduce a cost of the treatment by reducing an amount of materials used. Specifically, the dental nozzle tip may uniformly and relatively thinly apply bite registration materials that are used in a process of finding an accurate occlusion point.

When using a dental nozzle tip of the present disclosure, it is possible to obtain an effective dental bridge by applying an impression material much thinner and more accurately when compared to a typical case.

An impression material used for making a dental mold may be hardened when a certain amount of time elapses after discharge. When a typical tip is used, an amount of the impression material may increase, which is laborious and costly to cut an unnecessary portion. However, when a nozzle tip of the present disclosure is used, an excessive amount of the impression material may not be large. In addition, an optimal amount of impression material may be discharged to be suitable for a shape of tooth, so that there is no need to cut an overcoated portion. Also, it is possible to alleviate a loss of accuracy caused when a bit portion of a film is twisted due to the impression material discharged excessively.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A dental nozzle tip for an impression material, the dental nozzle tip comprising:
an impression material inlet; and
an impression material outlet connected to the impression material inlet,
wherein the impression material outlet is configured to have an expanded type opening at a tail end opposite to an end connected to the impression material inlet,
the tail end with the expanded type opening has a width greater than a height,
the impression material outlet has an upper face, a lower face, and both side faces connecting the upper face and the lower face,
at least a portion of the lower face of the impression material outlet is cut in a direction from the expanded type opening toward the impression material inlet so as to be open, and
a shape of a cut surface of the lower face of the impression material outlet is concavely rounded toward the impression material inlet.

2. The dental nozzle tip of claim 1, wherein a width of the dental nozzle tip is formed in a size corresponding to a width of a tooth such that at least an upper surface of the tooth is covered overall by a single discharge of an impression material on the tooth.

3. The dental nozzle tip of claim 1, wherein a width of the tail end with the expanded type opening is 5 millimeters (mm) to 13 mm,
a height of the tail end with the expanded type opening is 4 mm to 5.5 mm, and
the dental nozzle tip includes a tapered shape.

4. The dental nozzle tip of claim 1, wherein the lower face of the impression material outlet is cut by 1 mm to 2.5 mm from a virtual straight end line of the impression material inlet so as to be open,
in a cross section of the expanded type opening, a portion corresponding to the upper face of the impression material outlet includes a straight section, and
the impression material outlet is bent to make an acute angle with a virtual line extending from the impression material inlet.

5. A dental nozzle tip for an impression material, the dental nozzle tip comprising:
an impression material inlet; and
an impression material outlet connected to the impression material inlet,
wherein the impression material outlet is configured to have an expanded type opening at a tail end opposite to an end connected to the impression material inlet and
a lower face of the impression material outlet has an opening structure in a stepped shape at a portion in which the expanded type opening is formed.

6. The dental nozzle tip of claim 5, wherein at least a portion of the lower face of the impression material outlet is cut and open in a direction from the expanded type opening toward the impression material inlet when compared to an upper face of the impression material outlet.

7. The dental nozzle tip of claim 5, wherein the lower face in the stepped shape has a central portion corresponding to a low end and both side portions corresponding to high ends based on a center of the lower face.

8. The dental nozzle tip of claim 5, wherein a central portion of the lower face in the stepped shape includes a straight section.

9. The dental nozzle tip of claim 5, wherein the impression material outlet includes an upper face, the lower face, and both side faces connecting the upper face and the lower face and is formed to have a width greater than a height.

10. The dental nozzle tip of claim 5, wherein a width of the expanded type opening is formed in a size corresponding to a width of a tooth such that at least a top surface of the tooth is covered overall by a single discharge of an impression material on the tooth.

11. The dental nozzle tip of claim 5, wherein a width of the expanded type opening is 5 millimeters (mm) to 13 mm and
a height of the expanded type opening is 4 mm to 5.5 mm

12. The dental nozzle tip of claim 5, wherein a difference between a high end and a low end of the lower face of the impression material outlet is 1 mm to 2.5 mm.

13. The dental nozzle tip of claim 5, wherein the impression material outlet is in an expanded type structure that forms a symmetry based on a center,
in a cross section of the expanded type opening, a portion corresponding to the upper face of the impression material outlet includes a straight section, and
the impression material outlet is bent to make an acute angle with a virtual line extending from the impression material inlet.
